# EUROPEAN PATENT APPLICATION

(11) **EP 1 033 878 A2**
(43) Date of publication of application: **06.09.2000**
(21) Application number: 00103481.8
(22) Date of filing: 01.03.2000
(51) Int. Cl.: H04N 7/14

(54) **Portable communication terminal**

(30) Priority: 01.03.1999 JP 5266899
(71) Applicant: KABUSHIKI KAISHA TOSHIBA, Kawasaki-shi, Kanagawa 210-8520 (JP)
(72) Inventor: Ito, Koichi, 1-1 Shibaura 1-chome Minato-ku Tokyo 105 (JP); Okamoto, Seiichi, 1-1 Shibaura 1-chome Minato-ku Tokyo 105 (JP)
(74) Representative: HOFFMANN - EITLE

(57) **Abstract**

A call can be made after exactly confirming a party to be called from an image displayed on a display screen. Image information (face image) input by a camera (12) and a telephone number input from a keyboard (24) are associated and stored in a memory as a set of memory dial information. Where a call is made using the telephone number in the memory dial information, a control unit causes a display unit (32) to display each set of the telephone number and image information on a single display screen. Therefore, the telephone number of the destination for communication can be retrieved while confirming the image information displayed in units of a set of memory dial information.

## Description

The present invention relates to a portable communication terminal equipped with an image display device.

In general, when communication is performed between two parties using telephone terminals, etc., the party at the other end is designated by a telephone number. On the other hand, in the case of a TV telephone apparatus disclosed in Jpn. Pat. Appln. KOKAI Publication No. 2-89482, a TV screen 1 is divided into a number of (nine) screen portions, and these screen portions display communicable parties' face images 3, respectively. The caller can select the party to be called from the display portions.

This TV telephone apparatus disclosed in the KOKAI Publication, however, was designed on the assumption that communication is performed while face images are mutually transmitted or received, and thus this apparatus employs a large-sized display screen. Accordingly, even if the TV screen is divided into many screen portions, as mentioned above, the face image displayed on each screen portion is not difficult to view.

By contrast, in the case of a portable communication terminal apparatus intended for portable use, the entire apparatus is required to have a small size and accordingly the screen size of the display device provided on the apparatus is small. In this case, if the display screen is divided into plural screen portions, each screen portion becomes small and an image displayed on each screen portion would be difficult to view. As a result, the party to be called may be erroneously selected.

Under the circumstances, there is a demand for the advent of a portable communication terminal with which the party to be called can be exactly confirmed from an image displayed on the display screen and a call can be made after the confirmation.

Accordingly, it is an object of the present invention to provide a portable communication terminal with which a party to be called can be exactly confirmed from an image displayed on a display screen and a call can be made after the confirmation.

According to an aspect of the invention, there is provided a portable communication terminal comprising: display means for displaying information; memory means for storing a plurality of sets of information including a destination of communication which is associated with image information; setting means for setting the image information of each of the plural sets of information on the display means in units of each of the plural sets of information stored in the memory means; and communicating means, responsive to an instruction of communicating at a time when the image information is displayed on the display means by the setting means, for communicating on the basis of the information indicative of the destination of communication stored in the memory means in association with the displayed image information.

In the portable communication terminal, the destination of communication may include a telephone number.

In the portable communication terminal, the destination of communication may include an electronic mail address.

In the portable communication terminal, the display means may effect simultaneous display of the image information, a telephone number and a name.

In the portable communication terminal, the portable communication terminal may be a cellular phone.

In the portable communication terminal, the image information may include a face image of a party for communication.

In the portable communication terminal, the image information may include CG (Computer Graphics).

In the portable communication terminal, the image information may include illustration.

In the portable communication terminal, the image information may include a moving picture.

According to another aspect of the invention, there is provided a portable communication terminal comprising: a display means for displaying information; inputting means for inputting image information; memory means for storing a plurality of sets of information including an identification number which is associated with the image information input by the inputting means; setting means for setting the image information of each of the plural sets of information on the display means in units of each of the plural sets of information stored in the memory means; and communicating means, responsive to an instruction of communicating at a time when the image information is displayed on the display means by the setting means, for communicating on the basis of the identification number stored in the memory means in association with the displayed image information.

The portable communication terminal may further comprise: redial telephone number memory means for storing a telephone number used in previous communication; redial telephone number setting means for setting one of the identification number stored in the redial telephone number memory means and the image information stored in the memory means on the display means; and redial communicating means, responsive to an instruction of execution of communication at a time when one of the telephone number and the image information is displayed by the redial telephone number display means, for communicating on the basis of the displayed telephone number.

The portable communication terminal may further comprise: unanswered call history information memory means for storing a telephone number of a party, a call from whom has not been answered; unanswered call telephone number setting means for setting one of the telephone number stored in the unanswered call memory means and the image information stored in the memory means on the display means; and unanswered call communicating means, responsive to an instruction of communicating at a time when one of the telephone number and the image information is displayed by the unanswered call telephone number display means, for communicating on the basis of the displayed telephone number.

In the portable communication terminal, the display means may effect simultaneous display of the image information, a telephone number and a name.

In the portable communication terminal, the portable communication terminal may be a cellular phone.

In the portable communication terminal, the image information may include a face image of a party for communication.

In the portable communication terminal, the image information may include CG (Computer Graphics).

In the portable communication terminal, the image information may include illustration.

In the portable communication terminal, the image information may include a moving picture.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an example of a display screen of a conventional TV telephone apparatus;
FIG. 2 is a block diagram showing a system construction of a portable communication terminal according to an embodiment of the present invention;
FIGS. 3A and 3B show respectively an external structure of the portable communication terminal according to the embodiment and an example of a display screen thereof;
FIG. 4 shows an example of data structure of memory dial information stored in a memory;
FIG. 5 is a flow chart illustrating a memory dial process;
FIG. 6 is a flow chart illustrating a redial process; and
FIG. 7 is a flow chart illustrating an unanswered call process.

An embodiment of the present invention will now be described with reference to the accompanying drawings.

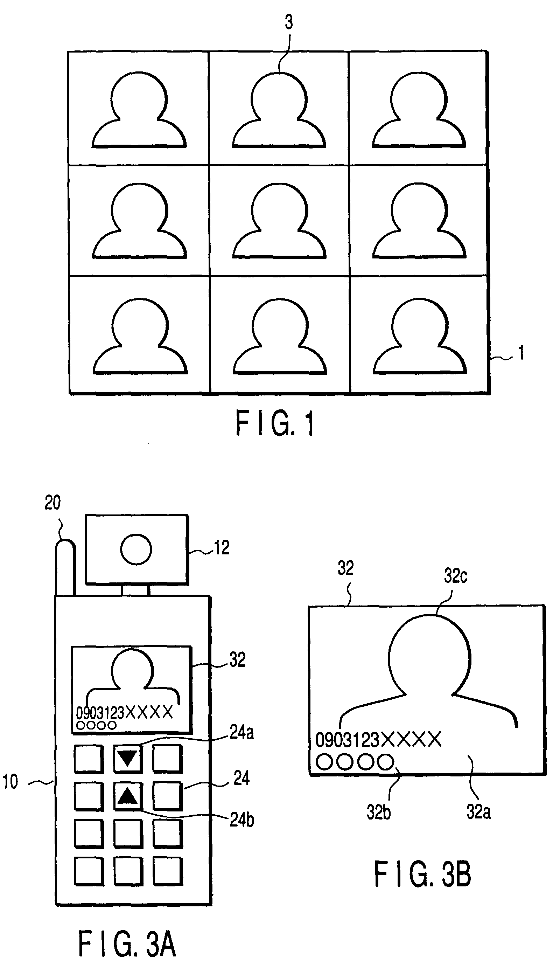

FIG. 2 is a block diagram showing a system construction of a portable communication terminal according to an embodiment of the present invention.

As is shown in FIG. 2, a portable communication terminal 10 according to the present invention is, for example, a cellular phone. The portable communication terminal 10 is equipped with an image pickup camera 12 detachably attached to a main body of the terminal 10. In the embodiment shown in FIG. 2, the camera 12 is provided on an upper part of the main body of the portable communication terminal 10. The camera 12 is electrically connected to the portable communication terminal 10 (an image process unit 30 to be described later) via a connector (not shown).

The portable communication terminal 10 includes functional components: a control unit 14; a memory 16; a radio unit 18; an antenna 20; a microphone receiver 22; a keyboard 24; a power supply unit 26; a timer 28; an image process unit 30; and a display unit 32.

The control unit 14 controls the entirety of the portable communication terminal 10. The control unit 14 realizes a speech control function for performing a speech call, and other various functions by executing programs stored in the memory 16. In the speech control function of the control unit 14, a speech signal input via the microphone receiver 22 is digitized and encoded by a predetermined speech coding system. Thus, coded speech data is generated and sent out via the radio unit 18. In addition, coded speech data received via the radio unit 18 is decoded and D/A converted to generate a speech signal. The speech signal is input to the microphone receiver 22 and a speech is sent out. On the basis of programs, the control unit 14 realizes other functions such as a memory dial process function, a redial process function and an unanswered call process function. These functions will be described later in detail.

The memory 16 stores programs for realizing various functions as well as various necessary information. The information stored in the memory 16 includes, for example, memory dial information 16a, redial telephone number information 16b and unanswered call history information 16c. The memory dial information 16a includes a plurality of information sets, in each of which a telephone number, character information (name) and image information (an image acquired by the camera 12) are associated. The redial telephone number information 16b includes information on telephone numbers of previously called parties. The unanswered call history information 16c includes information on the telephone number of a caller for notifying the user of the portable communication terminal 10 that the caller made a call when the user could not attend to it, as well as information on the time of the reception call. Both redial telephone number information 16b and unanswered call history information 16c can contain a plurality of information items.

The radio unit 18 executes, under the control of the control unit 10, wireless transmission/reception of information via the antenna 20.

The antenna 20 receives and transmits radio electric waves. The antenna 20 is connected to the radio unit 18.

The microphone receiver 22 includes a microphone and a speaker or an earphone, etc. The microphone receiver 22 functions to transmit/receive speech in a speech call mode. A speech signal input from the microphone receiver is input to a speech control functional component in the control unit 14. In addition, a speech is output from the microphone receiver 22 in accordance with a speech signal from the control unit 14.

The keyboard 24 is operated by the user to input various information to the portable communication terminal 10. The keyboard 24 has various keys such as dial keys used in inputting telephone numbers or characters; decision keys for deciding various setting; a redial key for designating execution of a redial operation; a menu key for displaying various selection menus; and arrow keys (e.g., upward and downward) for selecting items in menus and switching display screens. These keys may be exclusive-use keys or plural functions may be assigned to one key.

The power supply unit 26 supplies power to various parts of the portable communication terminal 10. The power supply unit 26 constantly supplies power to at least the portable communication terminal 10 and keyboard 24. In addition, under control of the control unit 14, the power supply unit 26 can turn on or turn off power supply to the respective parts.

The timer 28 provides time data to the control unit 14. The timer 28 is referred to, for example, when the passing of a predetermined time period is determined in respective processes.

The image process unit 30 has functions of performing a display control of the display unit 32 and encoding or decoding of data under control of the control unit 14. An image signal input from the camera 12 is digitized and encoded according to a predetermined encoding system. Thereby, coded image signal data is generated and output to the control unit 14. In addition, the image process unit 30 decodes the image data input from the control unit 14. Thus, an image signal is generated and displayed on the display unit 32.

The display unit 32 is constituted by, e.g., a liquid crystal display and displays various information under control of the image process unit 30.

FIG. 3A shows an external structure of the portable communication terminal 10. In a state shown in FIG. 3A, the camera 12 is detachably attached to an upper portion of the portable communication terminal 10. The antenna 20 is provided along a side portion of the terminal 10. The display screen of the display unit 32 and the keyboard 24 are provided one side face of the portable communication terminal. FIG. 3B shows an example of a display screen on the display unit 32.

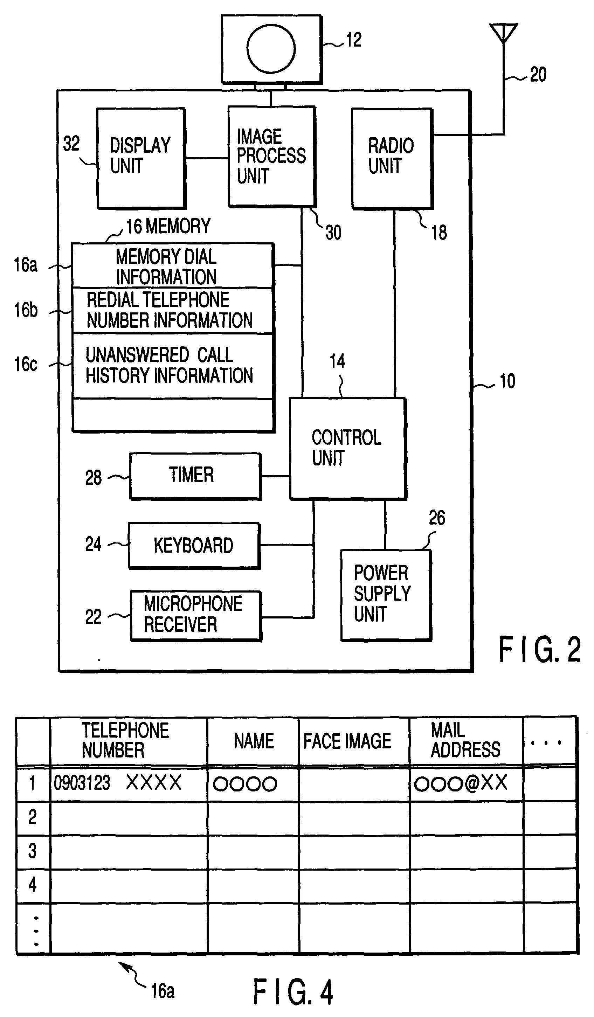

FIG. 4 shows an example of data structure of the memory dial information 16a stored in memory 16. As is shown in FIG. 4, the memory dial information 16a contains a plurality of registered entries each includes a telephone number, character information and a face image in an associated manner. Normally, information of a name is registered as the character information, and so the character information is described as the name hereinafter. In addition, where the portable communication terminal 10 is provided with a function of transmitting or receiving character messages (e.g., electronic mail), information on a mail address indicating a destination of transmission may also be registered in an associated manner.

As regards the registration of the memory dial information 16a, the character information on the telephone number and name is registered by operating the dial keys on the keyboard 24. In addition, with the portable communication terminal 10 of this embodiment, a given image acquired by the camera 12, for example, a face image of a person facing the terminal 10, can be registered in association with the character information of the telephone number and name.

Operations of the portable communication terminal 10 according to the present embodiment will now be described with reference to flow charts.

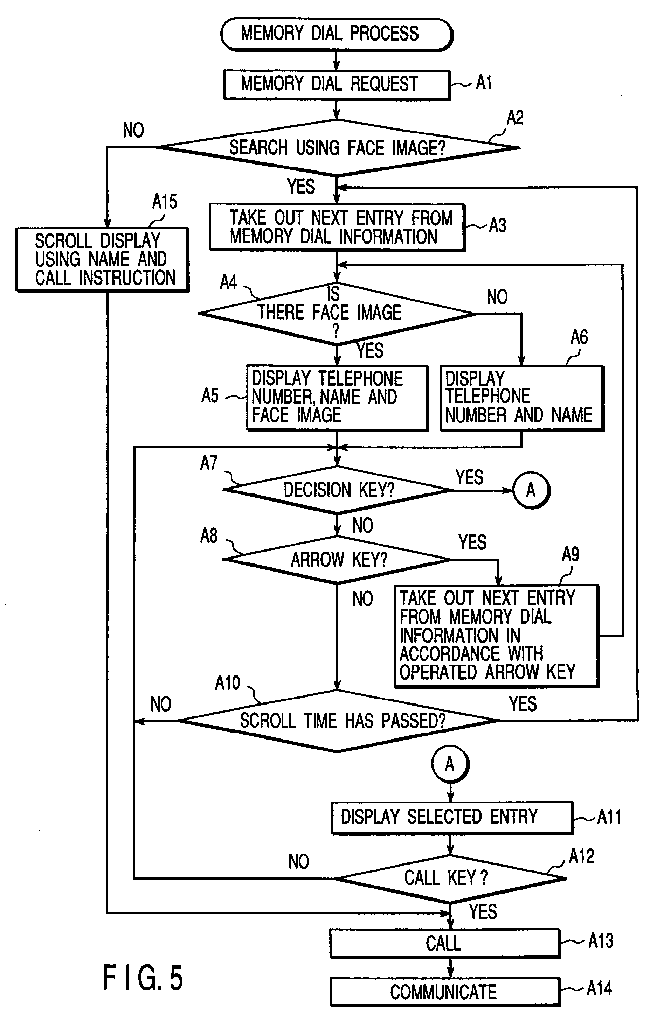

The memory dial process will first be described with reference to a flow chart of FIG. 5. In the memory dial process, it is possible to select a desired one of a plurality of telephone numbers registered in the memory dial information 16a in the memory 16, and originate a call for the selected telephone number. In this embodiment, when a desired telephone number is retrieved, a face image registered in association with the telephone number in the memory dial information 16a can be used.

If a memory dial request is issued by operation of a predetermined key on the keyboard 24 during a wait time (step A1), the control unit 14 causes the display unit to display a menu for selecting a retrieval mode in which only the information on the names registered in the memory dial information 16a is used or a retrieval mode in which the names and the face images registered in association with the names are used, when a telephone number is retrieved from the memory dial information 16a stored in the memory 16 in order to make a telephone call.

If an instruction for selecting the retrieval mode using face images is input by an operation on the keyboard 24 (step A2), the control unit 14 takes out a first entry from the memory dial information 16a in accordance with a predetermined order (step A3). The order in which entries are taken out from the memory dial information 16a may be selectively determined according to the order of registration, the alphabetical order of names, the frequency of calls, etc.

The control unit 14 determines whether a face image is registered in the entry taken out from the memory dial information 16a (step A4). If the face image is registered in the memory dial information 16a, the control unit 14 activates the image process unit 30 which in turn causes the display unit 32 to display the telephone number, name and face image of the taken-out entry (step A5). For example, as shown in FIG. 3B, a telephone number 32a, a name 32b and a face image 32c are displayed on a display screen of the display unit 32.

On the other hand, where the face image is not registered in the memory dial information 16a, the control unit 14 activates the image process unit 30 to cause the display unit 32 to display the telephone number and name of the take-out entry (step A6).

Once the content of the entry taken out of the memory dial information 16a is displayed, the contents of the subsequent entries are successively displayed according to a scroll instructed by the arrow key on the keyboard 24, or an automatic scroll based on a preset time (scroll time). Thereby, a desired telephone number can be retrieved.

Specifically, where an upward arrow key 24a (FIG. 3A) or a downward arrow key 24b (FIG. 3A) on the keyboard 24 is operated before the scroll time has passed, the control unit 14 takes out the next entry from the memory dial information 16a according to a predetermined order corresponding to the operated arrow key (steps A8, A9). The control unit 14 determines whether the face image is registered in the taken-out entry, similarly with the above. If the face image is registered, the face image along with the telephone number and name is displayed on the display unit 32 (steps A4, A5). Thus, where face images are registered in the memory dial information 16a, the face images registered in association with different telephone numbers can be successively displayed in accordance with the successive operations of the arrow keys.

If the scroll time has passed without the arrow key being depressed (step A10), the control unit 14 takes out the next entry from the memory dial information 16a according to a predetermined order (step A3) and determines whether the face image is registered in the taken-out entry, similarly with the above (step A4). If the face image is registered, the face image along with the telephone number and name is displayed on the display unit 32 (step A5). For example, where the scroll time is set to two seconds, each time two seconds have passed without a particular operation, the face image in each entry registered in the memory dial information 16a is displayed. The scroll time may be freely chosen. As a matter of course, if the arrow key on the keyboard 24 is operated during the automatic scroll, the face image registered in the entry is displayed in the order corresponding to the operated arrow key.

As has been described above, not only the telephone numbers and names but also face images registered in the entries in the memory dial information 16a are displayed according to the scroll instructed by the operation of the arrow key or the automatic scroll based on the scroll time. Thereby, the party (telephone number) to be called can be easily discriminated.

If the decision key on the keyboard is operated in the state in which the content of the entry associated with the party to be called is displayed, the control unit 14 causes the content (telephone number, name, face image) of the selected entry to be displayed in a fixed manner (step A11).

If a call key is operated (step A12) to communicate with the party, the content of the entry associated with whom was displayed, the control unit 14 makes a call in accordance with the telephone number in the entry to effect the line connection (step A13). If the line is connected, the communication is effected (step A14).

If a call is made to a party different from the party in the entry which is displayed in a fixed manner by the operation of the decision key, the arrow key is operated (step A8) to retrieve once again the entry registered in the memory dial information 16a. In this case, similarly with the above, the party (telephone call) to be called can be found by the scroll instructed by the operation of the arrow key or the automatic scroll based on the scroll time.

As has been described above, the telephone number of the party to be called can be easily retrieved by displaying not only the telephone number and name but also the face image. In this case, the face image is displayed on a single screen of the display unit 32. Accordingly, even if the size of the portable communication terminal 10 is reduced and the screen size of the display unit 32 also reduced, the face image does not become difficult to view. Therefore, the party to be called can be exactly selected.

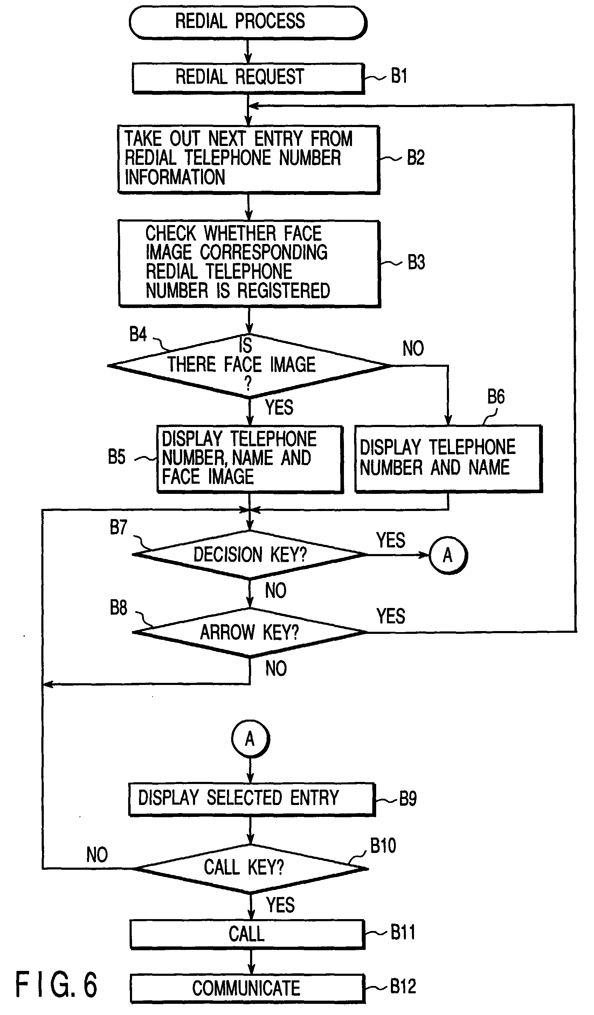

The redial process will now be described with reference to a flow chart of FIG. 6. In the redial process, a desired telephone number to be redialed ("redial telephone number") is retrieved from a plurality of (e.g., 10) previously dialed telephone numbers registered in the redial telephone number information 16b in the memory 16, and the retrieved telephone number is redialed. In this embodiment, where the redial telephone number is to be retrieved, the face image registered in the memory dial information 16a in association with the telephone number can be used to confirm the party to be redialed.

If a redial request is issued by operation of a predetermined key on the keyboard 24 during a wait time (step B1), the control unit 14 takes out a first entry from the redial telephone number information 16b in accordance with a predetermined order (step B2). The order in which entries are taken out from the redial telephone number information 16b may be selectively determined according to the order of dates of calls beginning from the latest call, the frequency of calls, etc.

The control unit 14 checks whether the face image corresponding to the redial telephone number taken out of the redial telephone number information 16b is registered in the memory dial information 16a (step B3). Specifically, based on the redial telephone number taken out of the redial telephone number information 16b, the control unit 14 searches telephone numbers registered in the memory dial information 16a. If there is a corresponding telephone number, it is determined whether the face image associated with this telephone number is registered.

If the face image is registered in the memory dial information 16a (step B4), the control unit 14 activates the image process unit 30 which in turn causes the display unit 32 to display the telephone number and face image of the associated entry (step B5). For example, similarly with the memory dial process, the telephone number as well as the face image is displayed on the single display screen of the display unit 32, as shown in FIG. 3B. In this case, if the name corresponding to the redial telephone number is obtained by searching the memory dial information 16a on the basis of the redial telephone number, the name is displayed along with the telephone number.

On the other hand, where the face image is not registered in the memory dial information 16a (step B4), the control unit 14 activates the image process unit 30 to cause the display unit 32 to display the redial telephone number (step B6). In this case, if the name corresponding to the redial telephone number is obtained by searching the memory dial information 16a on the basis of the redial telephone number, the name is displayed along with the telephone number.

Subsequently, by the scroll instructed by the operation of the arrow keys on the keyboard 24, the next redial telephone number registered in the redial telephone number information 16b and the face image and mane (where registered in the memory dial information 16a) corresponding to the redial telephone number are successively displayed. Thus, the desired redial telephone number can be found.

Specifically, where the upward arrow key 24a (FIG. 3A) or the downward arrow key 24b (FIG. 3A) on the keyboard 24 is operated (step B8), the control unit 14 takes out the next redial telephone number from the redial telephone number information 16b according to a predetermined order corresponding to the operated arrow key (steps B8, B2). The control unit 14 determines whether the face image associated with the taken-out redial telephone number is registered in the memory dial information 16a, similarly with the above (step B3). If the face image is registered, the face image along with the redial telephone number is displayed on the display unit 32 (steps B4, B5). Thus, where face images associated with the redial telephone numbers registered in the redial telephone number information 16b are registered in the entries in the memory dial information 16a, the face images associated with different redial telephone numbers can be successively displayed in accordance with the successive operations of the arrow keys.

Thus, the party to be redialed can be easily discriminated by displaying not only the telephone number registered in the redial telephone number information 16b but also the associated face image according to the scroll instructed by the operation of the arrow keys.

If the decision key on the keyboard 24 is operated in the state in which the redial telephone number of the party to be redialed is displayed and also the face image and name associated with the redial telephone number are displayed where these are registered in the memory dial information 16a, the control unit 14 causes the selected redial telephone number to be displayed in a fixed manner (step B9).

If the call key is operated (step B10) to communicate with the party whose redial telephone number is displayed, the control unit 14 makes a call in accordance with the redial telephone number to effect the line connection (step B11). If the line is connected, the communication is effected (step B12).

If a redial call is made to a party with a redial telephone number different from the redial telephone number displayed in a fixed manner by the operation of the decision key, the arrow key is operated (step B8) to retrieve once again the face image corresponding to the next redial telephone number registered in the redial telephone number information 16b. If a corresponding face image is registered, it is displayed along with the redial telephone number. In this case, similarly with the above, the desired party (telephone call) to be called can be found by the scroll instructed by the operation of the arrow keys.

As has been described above, where a redial call is made, a redial telephone number can be easily retrieved by displaying not only the redial telephone number registered in the redial telephone number information 16b but also the face image and confirming the party to be redialed on the basis of the face image. In this case, the face image is displayed on a single screen of the display unit 32. Accordingly, even if the size of the portable communication terminal 10 is reduced and the screen size of the display unit 32 also reduced, the face image does not become difficult to view. Therefore, the party to be redialed can be exactly selected.

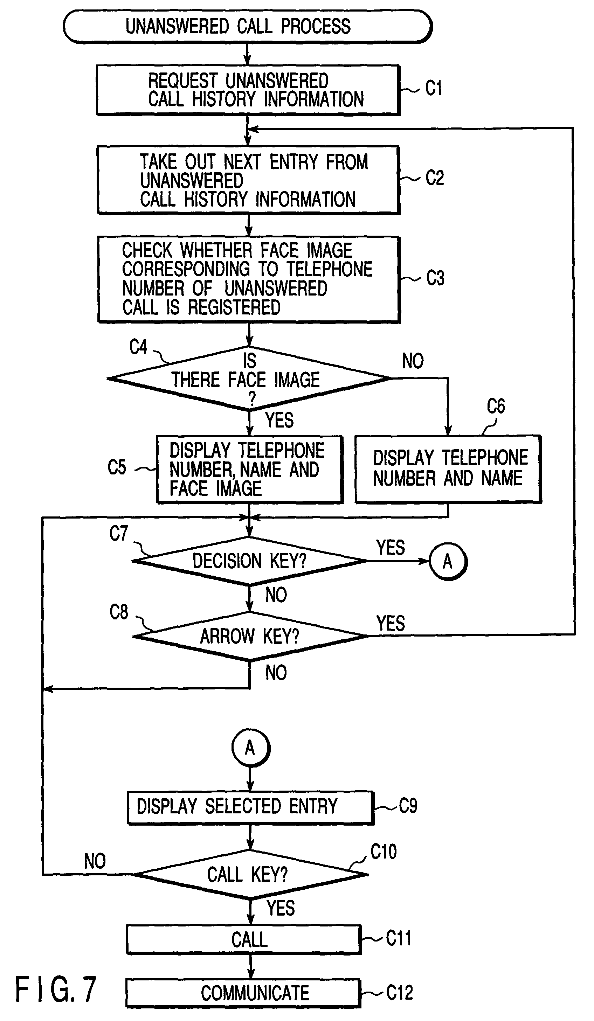

The unanswered call process will now be described with reference to a flow chart of FIG. 7. In the unanswered call process, a desired telephone number to be dialed can be retrieved from a plurality of (e.g., 10) telephone numbers of parties to be called, which notify the user of the presence of unattended calls and are registered in the unanswered call history information 16c in the memory 16, and the retrieved telephone number can be dialed. In this embodiment, where the telephone number to be used for responding to an unanswered call is to be retrieved, the face image registered in the memory dial information 16a in association with the telephone number can be used to confirm the party to be dialed.

If a request for display of unanswered call history information is issued by operation of a predetermined key on the keyboard 24 during a wait time (step C1), the control unit 14 takes out a first entry from the unanswered call history information 16c in accordance with a predetermined order (step C2). This information includes the telephone number to be dialed as well as the time of call reception. The order in which entries are taken out from the unanswered call history information 16c may be determined, for example, according to the order of the date/time of calls beginning from the latest unanswered call.

The control unit 14 checks whether the face image corresponding to the telephone number associated with the unanswered call, which has been taken out of the unanswered call history information 16c, is registered in the memory dial information 16a (step C3). Specifically, based on the telephone number taken out of the unanswered call history information 16c, the control unit 14 searches telephone numbers registered in the memory dial information 16a. If there is a corresponding telephone number, it is determined whether the face image associated with this telephone number is registered.

If the face image is registered in the memory dial information 16a (step C4), the control unit 14 activates the image process unit 30 which in turn causes the display unit 32 to display the telephone number and face image of the associated entry (step C5). For example, similarly with the memory dial process, the telephone number as well as the face image is displayed on the single display screen of the display unit 32, as shown in FIG. 3B. In this case, if the name corresponding to the telephone number associated with the unanswered call is obtained by searching the memory dial information 16a on the basis of the telephone number associated with the unanswered call, the name is displayed along with the telephone number.

On the other hand, where the face image is not registered in the memory dial information 16a (step C4), the control unit 14 activates the image process unit 30 to cause the display unit 32 to display the telephone number of the unanswered call (step C6). In this case, if the name corresponding to the telephone number of the unanswered call is obtained by searching the memory dial information 16a on the basis of the telephone number of the unanswered call, the name is displayed along with the telephone number.

Subsequently, by the scroll instructed by the operation of the arrow keys on the keyboard 24, the next telephone number of the unanswered call registered in the unanswered call history information 16c and the face image and mane (where registered in the memory dial information 16a) corresponding to this telephone number are successively displayed. Thus, the desired telephone number of the unanswered call, to which a callback is to be made, can be found.

Specifically, where the upward arrow key 24a (FIG. 3A) or the downward arrow key 24b (FIG. 3A) on the keyboard 24 is operated (step C8), the control unit 14 takes out the next telephone number from the unanswered call history information 16c according to a predetermined order corresponding to the operated arrow key (steps C8, C2). The control unit 14 determines whether the face image associated with the taken-out telephone number of the unanswered call is registered in the memory dial information 16a, similarly with the above (step C3). If the face image is registered, the face image along with the telephone number is displayed on the display unit 32 (steps C4, C5). Thus, where face images associated with the telephone numbers of unanswered calls registered in the unanswered call history information 16c are registered in the entries in the memory dial information 16a, the face images associated with different telephone numbers of unanswered calls can be successively displayed in accordance with the successive operations of the arrow keys.

Thus, the party to be dialed can be easily discriminated by displaying not only the telephone number registered in the unanswered call history information 16c but also the associated face image according to the scroll instructed by the operation of the arrow keys.

If the decision key on the keyboard 24 is operated in the state in which the telephone number of the party to whom a callback is to be made is displayed and also the face image and name associated with this telephone number are displayed where these are registered in the memory dial information 16a, the control unit 14 causes the selected telephone number to be displayed in a fixed manner (step C9).

If the call key is operated (step C10) to communicate with the party whose telephone number is displayed, the control unit 14 makes a call in accordance with the telephone number of the unanswered call to effect the line connection (step C11). If the line is connected, the communication is effected (step C12).

If a callback is made to a party with a telephone number different from the telephone number displayed in a fixed manner by the operation of the decision key, the arrow key is operated (step C8) to retrieve once again the face image corresponding to the next telephone number registered in the unanswered call history information 16c. If a corresponding face image is registered, it is displayed along with the telephone number of the unanswered call. In this case, similarly with the above, the desired party (telephone call) for callback can be found by the scroll instructed by the operation of the arrow keys.

As has been described above, where a callback is made to the party associated with the unanswered call, the telephone number can be easily retrieved by displaying not only the telephone number of the unanswered call registered in the unanswered call history information 16c but also the face image and confirming the party to be dialed on the basis of the face image. In this case, the face image is displayed on a single screen of the display unit 32. Accordingly, even if the size of the portable communication terminal 10 is reduced and the screen size of the display unit 32 also reduced, the face image does not become difficult to view. Therefore, the party to whom a callback is to be made can be exactly selected.

In the above description, the face image is described as being image information registered in the entry of the memory dial information 16 in association with the telephone number. However, since an image acquired by the camera 12 provided on the portable communication terminal 10 can be registered, an acquired image of an object, other than the face image, can be adopted. For example, an image of a pet kept by the party to be called may be adopted.

The image to be registered is not limited to an image acquired by the camera 12 provided on the portable communication terminal 10. If coded image data can be received by communication, it may be registered in the entry of the memory dial information 16a. The image information may be, for example, CG (Computer Graphics) or illustration associated with the party to be called.

The image information may be still image information or moving picture information. In the case of moving picture information, a large-sized memory is required. It is thus desirable to use a moving picture for a specific object of image.

Where a character message (e.g., electronic mail) is transmitted by the portable communication terminal 10, an address of a destination of transmission and image information associated with the address may be registered in the memory dial information 16a. Thereby, where the address of the description of transmission is to be found, as with the above-described embodiment, the associated image information can be retrieved by successive scroll display.

In the above description, the image information, telephone number and name are displayed at a time. However, the image information alone may be displayed. In particular, where the display screen is small, it is advantageous to display the image information alone.

As has been described above in detail, according to the present invention, where a telephone number is stored as a so-called memory dial, an image acquired by a camera, e.g., a face image, can be stored in memory means. When a call is to be made using the telephone number stored in the memory means, the telephone number for the call can be retrieved while confirming the image information (face image of the party to be called) displayed on an entry-by-entry basis.

In addition, where a call is to be made using a telephone number stored in the redial telephone number memory means or a telephone number stored in the unanswered call history memory means, the image information (face image of the party to be called) associated with the telephone number to be dialed is displayed. Therefore, the party to be called by a so-called redial mode or the party associated with the unanswered call, to whom a callback is to be made, can be confirmed by the image information.

## Claims

1. A portable communication terminal characterized by comprising:
a display means (32) for displaying information;
memory means (16a) for storing a plurality of sets of information including a destination of communication which is associated with image information;
setting means (30) for setting the image information of each of said plural sets of information on said display means (32) in units of each of said plural sets of information stored in said memory means (16a); and
communicating means (18), responsive to an instruction of communicating at a time when said image information is displayed on said display means by said setting means (30), for communicating on the basis of the information indicative of the destination of communication stored in said memory means (16a) in association with the displayed image information.

2. The portable communication terminal according to claim 1, characterized in that the destination of communication includes a telephone number.

3. The portable communication terminal according to claim 1, characterized in that the destination of communication includes an electronic mail address.

4. A portable communication terminal characterized by comprising:
a display means (32) for displaying information;
inputting means (12) for inputting image information;
memory means (16a) for storing a plurality of sets of information including an identification number which is associated with the image information input by said inputting means (12);
setting means (30) for setting the image information of each of said plural sets of information on said display means (32) in units of each of said plural sets of information stored in said memory means (16a); and
communicating means (18), responsive to an instruction of communicating at a time when said image information is displayed on said display means by said setting means (30), for communicating on the basis of the identification number stored in said memory means (16a) in association with the displayed image information.

5. The portable communication terminal according to claim 4, characterized by further comprising:
redial telephone number memory means (16b) for storing a telephone number used in previous communication;
redial telephone number setting means (30) for setting one of said identification number stored in said redial telephone number memory means (16b) and the image information stored in said memory means (16a) on said display means (32); and
redial communicating means (18), responsive to an instruction of execution of communication at a time when one of said telephone number and said image information is displayed by said redial telephone number display means (30), for communicating on the basis of the displayed telephone number.

6. The portable communication terminal according to claim 4, characterized by further comprising:
unanswered call history information memory means (16c) for storing a telephone number of a party, a call from whom has not been answered;
unanswered call telephone number setting means (30) for setting one of said telephone number stored in said unanswered call memory means (16c) and the image information stored in said memory means (16a) on said display means (32); and
unanswered call communicating means (18), responsive to an instruction of communicating at a time when one of said telephone number and said image information is displayed by said unanswered call telephone number display means (30), for communicating on the basis of the displayed telephone number.

7. The portable communication terminal according to claim 1 or 4, characterized in that said display means (30) effects simultaneous display of the image information, a telephone number and a name.

8. The portable communication terminal according to claim 1 or 4, characterized in that said portable communication terminal is a cellular phone.

9. The portable communication terminal according to claim 1 or 4, characterized in that said image information includes a face image of a party for communication.

10. The portable communication terminal according to claim 1 or 4, characterized in that said image information includes CG (Computer Graphics).

11. The portable communication terminal according to claim 1 or 4, characterized in that said image information includes illustration.

12. The portable communication terminal according to claim 1 or 4, characterized in that said image information includes a moving picture.
